# EUROPEAN PATENT APPLICATION

(11) **EP 3 324 323 A1**
(43) Date of publication of application: **23.05.2018**
(21) Application number: 16306511.3
(22) Date of filing: 18.11.2016
(51) Int. Cl.: G06F 21/34, G07C 9/00, H04N 1/32, B42D 25/333

(54) **METHOD OF ISSUING AN IDENTITY DOCUMENT**

(71) Applicant: GEMALTO SA, 92190 Meudon (FR)
(72) Inventor: VILJANEN, Petri, 13881 Gemenos Cedex (FR)

(57) **Abstract**

The invention is a method for issuing an identity document uniquely allocated to a user. The method comprises the steps of:
- extracting a biometric reference from a face of the user during an enrollment phase,
- generating a biometric pattern from the biometric reference using a secret key of an asymmetric key pair,
- writing a visual pattern on a surface of said identity document, said visual pattern including the biometric pattern.

## Description

### (Technical field)

The present invention relates to the methods of issuing identity documents and verifying the validity of said identity documents and their holder's identity. It relates particularly to identity documents including biometric data.

### (Background)

On documents of identity the most common forgeries are currently photo substitution and manipulation. Most identity document forgeries evolve around the idea of claiming to be somebody else who you are. One of the most common approach taken by forgers is to use an existing document and manipulate or substitute the photo. The security level of the most sophisticated identity documents is currently high and therefore the growing trend is impostors. Instead of trying to manipulate the document the criminal tries to alter himself/herself to look like the owner of a valid document. The most effective method to recognize impostors is the use of biometrics, but necessary infrastructure is costly and cumbersome and therefore only available at fixed locations. Wider use at the moment is seen mostly only with passports and automated border control gates. There is a need for solution that can be universally used with any identity document, that requires no heavy investment to infrastructure; and has minimal effect on the cost of the document.

### (Summary of the Invention)

An object of the invention is to solve the above mentioned technical problem.

The object of the present invention is a method for issuing an identity document which is uniquely allocated to a user. The method comprises the following steps:
- extracting a biometric reference from a face of the user during an enrollment phase,
- generating a biometric pattern from the biometric reference using a secret key of an asymmetric key pair,
- writing a visual pattern on a surface of said identity document, the visual pattern including the biometric pattern.

Advantageously, the method may comprise the further step of publishing on a trusted distribution platform both a software application and a public key of said asymmetric key pair, the software application being intended to be installed on a portable communication terminal and being designed to retrieve the biometric pattern from the visual pattern, to retrieve the biometric reference from the biometric pattern using the public key and to check if the biometric reference matches a facial data captured by the portable communication terminal.

Advantageously, the extracting step may be performed from an image of the face of the user.

Advantageously, the generating step may be performed by enciphering the biometric reference with the secret key.

Advantageously, the generating step may be performed by computing a signature of the biometric reference with the secret key and the biometric pattern may comprise both said signature and the biometric reference.

Advantageously, a picture of the user may be printed on said surface and the visual pattern may be included in the picture.

Another object of the present invention is a method for authenticating a user. The method comprises the following steps:
- a portable communication terminal reads a visual pattern from a surface of an identity document uniquely allocated to the user and extracts a biometric pattern from the visual pattern,
- the portable communication terminal retrieves a biometric reference from the biometric pattern using a public key of an asymmetric key pair,
- the portable communication terminal captures a facial data from a face of the user, and
- the portable communication terminal checks if the facial data matches the biometric reference and authenticates the user only in case of successful checking.

Advantageously, the method may comprise the step of installing into said portable communication terminal both a software application and the public key from a trusted distribution platform, the software application being designed to retrieve the biometric pattern from the visual pattern, to retrieve the biometric reference from the biometric pattern using the public key and to check if the biometric reference matches the facial data.

Advantageously, a picture of the user may be printed on said surface and the method may comprise the further steps:
- the portable communication terminal captures facial elements from the picture,
- the portable communication terminal checks if the facial elements match the biometric reference and authenticates the identity document only in case of successful checking.

Advantageously, the biometric pattern may be the biometric reference enciphered with a secret key of the asymmetric key pair and the checking of facial data versus the biometric reference may be performed only if the identity document has been successfully authenticated.

Advantageously, the biometric pattern may comprise both the biometric reference and a signature of the biometric reference computed with a secret key of the asymmetric key pair and the method may comprise the further step:
- the portable communication terminal checks if the signature is valid using the public key of the asymmetric key pair and authenticates the user only in case of successful checking.

Another object of the present invention is an identity document which is uniquely allocated to a user. The identity document comprises a surface. A visual pattern is written on the surface. The visual pattern includes a biometric pattern generated from a biometric reference using a secret key of an asymmetric key pair, said biometric reference being extracted from a face of the user.

Advantageously, the biometric pattern may be the biometric reference enciphered with said secret key.

Advantageously, the biometric reference may comprise at least one element selected from the group consisting in two-dimensional facial features, three-dimensional facial features, iris features and skin texture features.

Advantageously, the visual pattern may be written in a form selected from the group consisting in one-dimensional code, two-dimensional code, machine readable zone, watermark in an image, steganography feature in an image and drawing.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising a distribution platform, a portable communication terminal and an identity document according to an embodiment of the invention;
- Figure 2 depicts schematically an example showing interactions between a portable communication terminal and an identity document according to an embodiment of the invention;
- Figure 3 is a flow chart for issuing an identity document according to an embodiment of the invention;
- Figure 4 is a flow chart for authenticating the holder of an identity document according to an embodiment of the invention; and
- Figure 5 is a flow chart showing additional steps allowing to authenticate the identity document according to another embodiment of the invention.

### (Detailed description of the preferred embodiments)

The invention may apply to any kind of identity document comprising a support on the surface of which data can be written.

The holder of the identity document is intended to be authenticated by a portable communication terminal 50 (or mobile equipment) which comprises a camera and a processor able to run software applications.

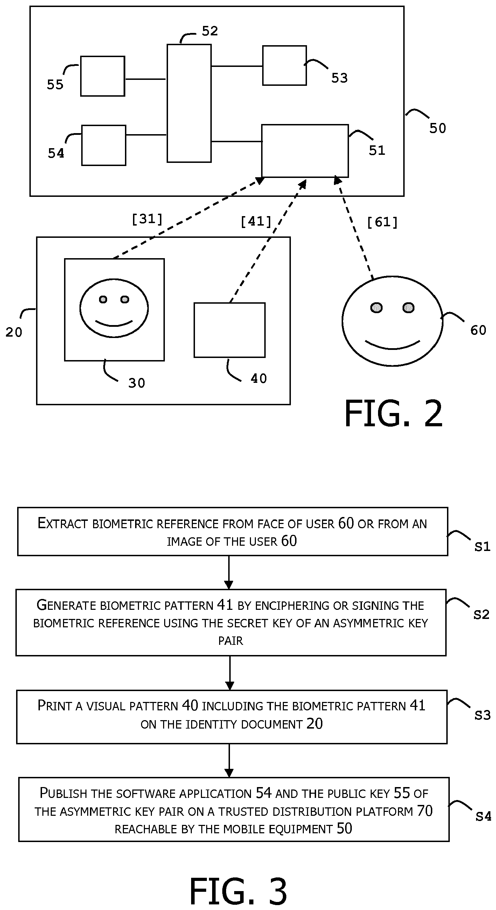

**Figure 3** is a flow chart for issuing an identity document 20 according to an embodiment of the invention.

The identity document 20 is uniquely allocated to a user 60. For instance, the identity document 20 is the passport of the user 60.

The method starts with an enrollment phase. At step S1, a biometric reference is extracted from the face of the user 60. The extraction can be made by a computer machine either directly from the user's face or from any picture of the user's face. The extraction can be performed using any facial biometric algorithm technology that produces a hashed biometric reference. (i.e. that creates a compressed reference out of the biometrics.) The biometric reference is assumed to be unique for the user 60.

The biometric reference can be made from two-dimensional facial features, three-dimensional facial features, iris features or skin texture features. It may also be a combination of several of the above-listed technologies.

At step S2, a biometric pattern 41 is generated from the extracted biometric reference with a secret key of an asymmetric key pair. A first alternative is to generate the biometric pattern 41 by ciphering the biometric reference using the secret key. In this case, the biometric pattern 41 contains the result of the ciphering operation. A second alternative is to compute a signature of the biometric reference using the secret key. In this case, the biometric pattern 41 comprises both the computed signature and the biometric reference.

In the first alternative of step S2, the encryption of the biometric reference may be performed with any kind of asymmetric encryption algorithms, like RSA (Rivest-Shamir-Adleman), EC (Elliptic Curve) or ElGamal encryption. This is done preferably directly on the biometric reference without utilizing a symmetric encryption algorithm first. The goal of this first alternative is to produce a shorter biometric pattern. And even if encryption is used, the goal is not to protect the data from unauthorized reading, but provide a cryptographic means to verify its' authenticity.

In the second alternative of step S2, the signature of the biometric reference may be performed with any kind of asymmetric signature algorithms like DSA (Digital Signature Algorithm), ECDSA (Elliptic Curve Digital Signature Algorithm), EdDSA (Edwards-curve Digital Signature Algorithm) or Schnorr signature utilizing the appropriate HASH algorithm if necessitated by the length of the biometric reference.

At step S3, the issuing machine writes a visual pattern 40 on the surface of the identity document 20. The visual pattern is built by the personalization system so that it includes the biometric pattern 41. In one embodiment, the visual pattern 40 can be generated before the printing operation. Alternatively, the visual pattern 40 may be dynamically generated during the writing operation. For instance, the printer may generate the visual pattern 40 on the fly as an independent item or combined in another personalization element to be printed on the surface.

The visual pattern 40 must be visually readable by the portable communication terminal 50. It is to be noted that the visual pattern 40 is different from the picture of the user which may be printed on the identity document.

In one embodiment, the visual pattern 40 may be written in the form of a one-dimensional code, a two-dimensional code (also named 2D code like a flash code or QR-code), an image, a machine readable zone (MRZ), a character string, an icon, etc.

In another embodiment, the visual pattern 40 is included in a picture 30 of the user which is printed on the surface of the identity document 20. In this case, the visual pattern 40 can be concealed using steganography or watermarking technologies.

At step S4, the issuer of the identity document 20 publishes on a trusted distribution platform 70 both the public key 55 of the asymmetric key pair and a software application 54. This software application 54 is intended to be run by a portable communication terminal 50 (or mobile equipment). The software application 54 is designed to analyze a first picture taken by the mobile equipment 50 in order to retrieve the biometric pattern 41, to retrieve the biometric reference from the biometric pattern 41 by using the public key 55 and to analyze a second picture (i.e. facial data 61) taken by the mobile equipment 50 in order to check if the second picture matches the biometric reference. The portable communication terminal 50 is assumed to have access to the trusted distribution platform 70 in order to download both the public key 55 and the software application 54. Preferably, the portable communication terminal 50 is a smartphone. The trusted distribution platform 70 may be Google Play store ®, Windows phone store ®, Apple store ® or a Government server for example.

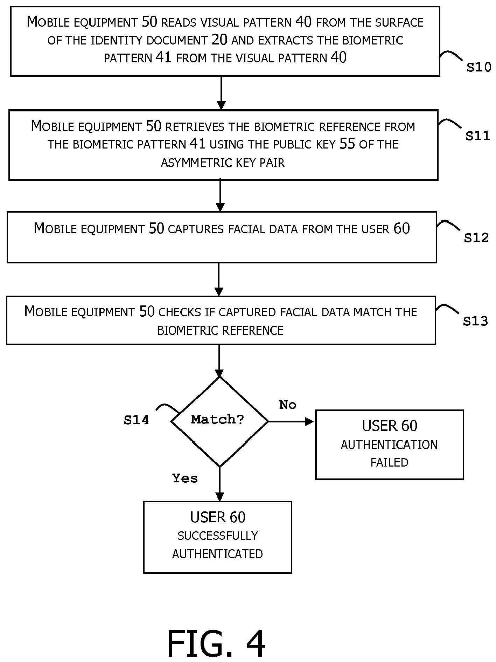

**Figure 4** shows a flow chart for authenticating the holder 60 of an identity document 20 according to an embodiment of the invention.

At step S10, the mobile equipment 50 reads the visual pattern 40 from the surface of the identity document 20. For instance, the mobile equipment 50 can take a first picture of the visual pattern 40. Then the mobile equipment 50 extracts the biometric pattern 41 from the visual pattern. This extraction can be run by the software application 54.

At step S11, the mobile equipment 50 (in fact the software application 54) automatically retrieves the biometric reference from the biometric pattern 41 using the public key 55. If the biometric pattern 41 contains the enciphered biometric reference, the software application 54 decrypts the biometric pattern 41 with the public key 55. If the biometric pattern 41 contains the signature of the biometric reference, the software application 54 verifies the signature with the public key 55. In case of wrong signature, the process is ended.

At step S12, the mobile equipment 50 captures a facial data 61 from the user 60. For instance, the mobile equipment 50 can take a picture of the user's face. The mobile equipment 50 can take several pictures of the user's face (left side, right side, front face) in case of three-dimensional facial features.

At step S13, the software application 54 in mobile equipment 50 checks if the facial data 61 matches the biometric reference. The matching will be done with the same biometric algorithm technology that was used during the issuance of the document to create the biometric reference. Then at step S14 the software application 54 in mobile equipment 50 authenticates the user 60 if the matching succeed and denies user authentication if the matching failed.

The result of the user's authentication can be shown through the display 53 of the terminal equipment 50 or sent to another devices.

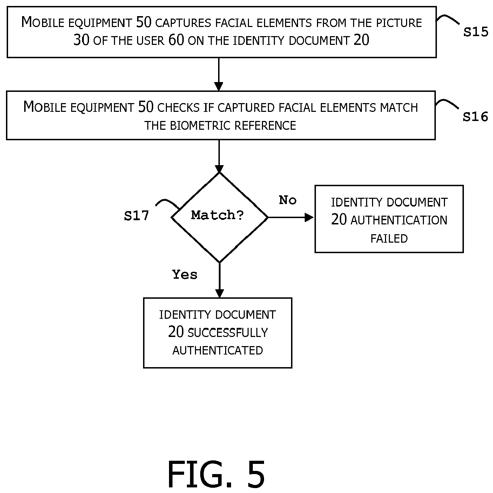

**Figure 5** depicts a flow chart showing additional steps allowing to authenticate the identity document 20 according to another embodiment of the invention.

In this embodiment, a picture 30 of the user 60 is assumed to be printed on the surface of the identity document 20. The authenticating method can comprises three steps in addition of the method described at Figure 4.

At step S15, the mobile equipment 50 captures a facial elements 31 from the picture 30. For instance, the mobile equipment 50 can take a picture of the user's picture 30.

At step S16, the mobile equipment 50 checks if the captured facial elements 31 match with the biometric reference. The matching will be done with the same biometric algorithm technology that was used during the issuance of the document to create the biometric reference. Then at step S17 the mobile equipment 50 authenticates the identity document 20 if the matching succeed. It denies identity document 20 authentication if the matching failed and stops the process of user authentication.

Preferably the software application 54 is designed to execute operations described in steps S15, S16 and S17.

Preferably, these three additional steps are run before step S14 so that the user can be authenticated only if the identity document 20 has been authenticated. Optimally these additional steps are performed between steps S11 and S12.

According to the embodiment of Figure 5, it is to be noted that when the biometric pattern 41 comprises the signature of the biometric reference, the authentication of the user 60 can succeed only if the following three operations were carried out successfully: the validity of the signature is successfully verified, the identity document 20 is successfully authenticated and the user's face is successfully authenticated versus the biometric reference stored on the identity document 20.

According to the embodiment of Figure 5, it is to be noted that when the biometric pattern 41 comprises the enciphered biometric reference, the authentication of the user 60 can succeed only if the following three operations were carried out successfully: the biometric reference is successfully deciphered from the biometric pattern 41, the identity document 20 is successfully authenticated and the user's face is successfully authenticated versus the biometric reference stored on the identity document 20.

Advantageously, the capture of both the biometric pattern 41 and the facial elements 31 may be done through a single picture taken by the camera 51.

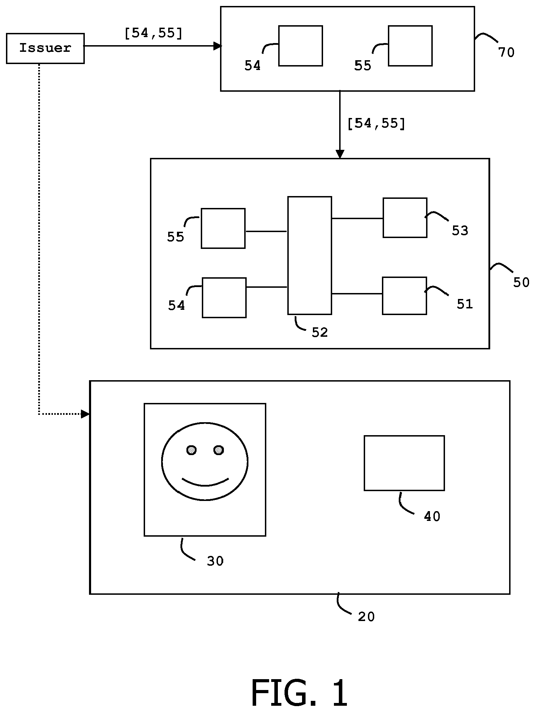

**Figure 1** depicts schematically an example of a system comprising a distribution platform 70, a portable communication terminal 50 and an identity document 20 according to an embodiment of the invention.

The issuer generated the identity document 20 as shown in dotted line. In this example, the identity document 20 comprises both a visual pattern 40 generated according to the invention and a picture 30 of the user 60 to whom the identity document 20 is uniquely associated. The identity document may be e.g. driving license, identity card, passport or healthcare card.

The issuer populates the trusted distribution platform 70 with both the software application 54 (as described above) and the public key 55 of the asymmetric pair used for generating the biometric pattern 41 included in the visual pattern 40. The trusted distribution platform 70 may be implemented through one or several server computers which are assumed to be reachable by the portable communication terminal 50.

The portable communication terminal 50 (also named communication terminal) includes a processor 52, a camera 51 and a display 53. The software application 54 and the public key 55 are installed in the communication terminal 50 from the trusted distribution platform 70. A secure connection may be established between the communication terminal 50 and the trusted distribution platform 70 via a secure channel through Internet (via HTTPs for example) or through a telecom channel. Preferably, the portable communication terminal 50 is a smartphone. It may also be a tablet or an equivalent wearable device.

The identity document 20 may belong to a batch which is deployed on the field. In this case either multiple public keys are sent to the trusted distribution platform 70 or a single public key is shared by all identity documents of the batch. In case multiple keys 55 are used, the software has method of identifying the key used in each individual document. This is done by utilizing visual information on the surface of the document. This visual identifier can be any kind of separate element on the surface of the document that the mobile equipment 50 reads and is able to interpret in the software application 54. (e.g. serial number, date of issuance). Alternatively the identifier for the key can be incorporated as part of the biometric pattern 41 that is personalized on the surface of the document as visual pattern 40. In this later case the biometric pattern 41 is composed of plain text key identifier in addition to the information described in the explanation for Figure 3 and Step S2.

**Figure 2** depicts schematically an example showing interactions between the portable communication terminal 50 and the identity document 20 according to an embodiment of the invention.

The identity document 20 and the portable communication terminal 50 of Figure 2 are similar to those of Figure 1.

When the authentication of the user 60 is in progress, the portable communication terminal 50 retrieves the facial data 61 from the user's face and retrieves the biometric pattern 41 from the visual pattern 40. Additionally, the portable communication terminal 50 may retrieve the facial elements 31 from the user's picture 30.

In some embodiments of the invention, the biometric pattern 41 is digitally encrypted instead of signing (see Figure 3 Step S2 alternative 1). The goal is not to protect the data from unauthorized reading, but provide a cryptographic means to verify its' authenticity while minimizing the size of the biometric pattern 41 and visual pattern 40. This guarantee can be achieved by being able to decrypt the biometric pattern 41 read form the document 20 with the appropriate public key 55 and successfully using it to conduct authentication. In most embodiments where encrypted biometric pattern is used, if the authentication fails, the mobile equipment 50 and its' software application 54 cannot determine the cause of the failure. Either the visual pattern 40 was fake or the person claiming to be the owner of the document 60 is not correct. However, when utilizing the optional document authentication described in figure 5, the exact cause can be determined. In this case, if the optimal method fails, the identity document 20 is fake. If the optional method succeeds, but the primary method fails, the person claiming to be the owner of the document is not correct.

Thanks to the invention, there is no need to deploy a certificate-based infrastructure which is costly and heavy to manage.

Some embodiments of the invention allows to guard against fraudsters who try to change the user's picture printed on the identity device. The invention applies to any types of identity document like passport, ID-card, driver's license, healthcare card, etc.

The invention does not require the deployment of new electronic machines. The invention does not require the upgrade of existing communication terminals.

It must be understood, within the scope of the invention, that the above-described embodiments are provided as non-limitative examples. In particular, additional items may be printed on the surface of the identity document.

The invention is not limited to the described embodiments or examples. In particular, the features described in the presented embodiments and examples may be combined.

The architecture of the portable mobile terminal shown at Figure 1 is provided as examples only. This architecture may be different.

## Claims

1. A method for issuing an identity document (20) uniquely allocated to a user (60), said method comprising the following steps:
- extracting a biometric reference from a face of the user (60) during an enrollment phase,
- generating a biometric pattern (41) from the biometric reference using a secret key of an asymmetric key pair,
- writing a visual pattern (40) on a surface of said identity document (20), said visual pattern (40) including the biometric pattern (41).

2. The method of claim 1, wherein said method comprises the further step of publishing on a trusted distribution platform (70) both a software application (54) and a public key (55) of said asymmetric key pair, said software application (54) being intended to be installed on a portable communication terminal (50) and being designed to retrieve the biometric pattern (41) from the visual pattern (40), to retrieve the biometric reference from the biometric pattern (41) using the public key (55) and to check if the biometric reference matches a facial data (61) captured by the portable communication terminal (50).

3. The method of claim 1, wherein the extracting step is performed from an image of the face of the user (60).

4. The method of claim 1, wherein the generating step is performed by enciphering the biometric reference with the secret key.

5. The method of claim 1, wherein the generating step is performed by computing a signature of the biometric reference with the secret key and wherein the biometric pattern (41) comprises both said signature and the biometric reference.

6. The method of claim 1, wherein a picture (30) of said user (60) is printed on said surface and wherein the visual pattern (40) is included in the picture (30).

7. A method for authenticating a user (60), said method comprising the following steps:
- a portable communication terminal (50) reads a visual pattern (40) from a surface of an identity document (20) uniquely allocated to said user (60) and extracts a biometric pattern (41) from said visual pattern (40),
- the portable communication terminal (50) retrieves a biometric reference from the biometric pattern (41) using a public key (55) of an asymmetric key pair,
- the portable communication terminal (50) captures a facial data (61) from a face of the user (60),
- the portable communication terminal (50) checks if the facial data (61) matches the biometric reference and authenticates the user (60) only in case of successful checking.

8. The method of claim 7, wherein said method comprises the step of installing into said portable communication terminal (50) both a software application (54) and the public key (55) from a trusted distribution platform (70), said software application (54) being designed to retrieve the biometric pattern (41) from the visual pattern (40), to retrieve the biometric reference from the biometric pattern (41) using the public key (55) and to check if the biometric reference matches the facial data (61).

9. The method according to claims 7 or 8, wherein a picture (30) of said user (60) is printed on said surface and wherein the method comprises the steps:
- the portable communication terminal (50) captures facial elements (31) from the picture (30),
- the portable communication terminal (50) checks if the facial elements (31) match the biometric reference and authenticates the identity document (20) only in case of successful checking.

10. The method according to claim 9, wherein the biometric pattern (41) is the biometric reference enciphered with a secret key of the asymmetric key pair and wherein the checking of facial data (61) versus the biometric reference is performed only if the identity document (20) has been successfully authenticated.

11. The method according to claims 7 or 8, wherein the biometric pattern (41) comprises both the biometric reference and a signature of the biometric reference computed with a secret key of the asymmetric key pair and wherein the method comprises the further step:
- the portable communication terminal (50) checks if the signature is valid using the public key of the asymmetric key pair and authenticates the user (60) only in case of successful checking.

12. An identity document (20) uniquely allocated to a user (60), said identity document (20) comprising a surface,
**characterized in that** a visual pattern (40) is written on the surface, said visual pattern (40) including a biometric pattern (41) generated from a biometric reference using a secret key of an asymmetric key pair, said biometric reference being extracted from a face of the user (60).

13. The identity document (20) of claim 12, wherein the biometric pattern (41) is the biometric reference enciphered with said secret key.

14. The identity document (20) of claim 12, wherein the biometric reference comprises at least one element selected from the group consisting in two-dimensional facial features, three-dimensional facial features, iris features and skin texture features.

15. The identity document (20) of claim 12, wherein the visual pattern (40) is written in a form selected from the group consisting in one-dimensional code, two-dimensional code, machine readable zone, watermark in an image, steganography feature in an image and drawing.
